# NEUE EUROPÄISCHE PATENTSCHRIFT

(11) **EP 0 860 714 B2**
(45) Veröffentlichungstag und Bekanntmachung des Hinweises auf die Entscheidung über den Einspruch: **24.01.2007**
(45) Hinweis auf die Patenterteilung: 05.12.2001
(21) Anmeldenummer: 98100619.0
(22) Anmeldetag: 15.01.1998
(51) Int. Cl.: G01S 17/93, G01S 17/42

(54) **Verfahren und Vorrichtung zum Bestimmen eines Abstandes eines Hindernisses von einem Fahrzeug**
Method and device for determining the distance to an obstacle for a vehicle
Procédé et système de détection de la distance d'un obstacle pour véhicule

(30) Priorität: 20.02.1997 DE 19706704
(43) Veröffentlichungstag der Anmeldung: 26.08.1998
(73) Patentinhaber: Volkswagen Aktiengesellschaft, 38436 Wolfsburg (DE)
(72) Erfinder: Ruchatz, Thomas, Dipl.-Ing., 38165 Lehre (DE); Bäker, Wolfgang, 38114 Braunschweig (DE)
(74) Vertreter: Zucker, Volker

(56) Entgegenhaltungen:
- DE-A1- 4 343 092
- GB-A- 2 131 642
- US-A- 5 045 856
- US-A- 5 461 357
- US-A- 5 463 384

## Beschreibung

Die vorliegende Erfindung bezieht sich auf ein Verfahren zum Bestimmen eines Abstandes eines Hindernisses von einem Fahrzeug mit einem Abstandssensor und eine Vorrichtung zum Bestimmen eines Abstandes eines Hindernisses von einem Fahrzeug mit einem Abstandssensor zum Aussenden von Sensorstrahlen und zum Erfassen wenigstens eines von dem Hindernis rückgestreuten Sensorsignals nach dem Oberbegriff des jeweiligen unabhängigen Anspruchs.

Der Abstandssensor in einem Fahrzeug arbeitet in der Regel nach dem Laufzeitprinzip und verwendet Radar-, Laser- oder bei besonderen Anforderungen UItraschallsignale. Insbesondere werden bei Abstandssensoren, die auf den vergleichsweise scharf gebündelten Lasersignalen basieren, gleichzeitig mehrere Lasersignale in unterschiedliche Richtungen ausgestrahlt, damit neben direkt in Fahrtrichtung vor dem Fahrzeug befindlichen Hindernissen auch Hindernisse erfaßt werden, die etwas seitlich von der Fahrtrichtung die Fahrbahn vor dem Fahrzeug blockieren. Es ist dabei durchaus wünschenswert, daß die Laserstrahlen für diese Anwendung eine gewisse Divergenz zeigen und daher in größerer Entfernung einen entsprechend größeren Teil der Fahrbahn abdecken.

Da man einen möglichst großen Bereich auf der Fahrbahn überwachen will, ist man bestrebt, möglichst divergente Laserstrahlen zu verwenden. Dabei entstehen ab einer bestimmten Entfernung vom Fahrzeug "Lücken" einer Größe zwischen den Laserstrahlen, durch die sich ein Hindernis, beispielsweise ein Motorrad, dem Fahrzeug nähern kann, ohne von dem Abstandssensor erfaßt zu werden.

Wenn der Abstandssensor beispielsweise fünf Strahlen in jeweils gleichen Winkelabständen vonetwa 1,2° gleichzeitig ausstrahlt, die derart divergent sind, daß sie in 100 m Entfernung jeweils eine horizontale Ausdehnung von 1 m haben, insgesamt also eine horizontale Strecke von 5 m überstreichen, so decken die Strahlen zwar einen Winkelintervall von ungefähr 10° bis 11° und damit in 100 m Entfernung eine Länge von 9 m ab; zwischen den Strahlen ergeben sich aber in einer Entfernung von 100 m vor dem Fahrzeug Lücken von jeweils ebenfalls 1 m Breite, in denen z. B. ein Hindernis mit einer Breite von ca. 0,5 m in ungünstigen Fällen nicht erfaßt würde.

Der nächstliegende Stand der Technik: GB-A-2 131 642 (D1) offenbart ein Verfahren, und sowie eine Vorrichtung zum Bestimmen eines Abstandes eines Hindernisses von einem Fahrzeug mit einem Abstandssensor, bei dem von dem Abstandssensor Sensorstrahlen in räumlich unterschiedliche Richtungen ausgesendet werden und von dem Abstandssensor wenigstens ein von dem Hindernis rückgestreutes Sensorsignal erfaßt wird.

Die Aufgabe der Erfindung ist es, einen Abstandssensor zu schaffen, der einen kleinen Bauraum benötigt, damit in Serienkraftfahrseugen einsetzbar ist und mit dem eine nahezu lückenlose Überwachung des für eine Abstandsregelung notwendigen Bereich vor dem Fahrzeug möglich ist.

Die Aufgabe wird gelöst durch ein Verfahren mit den Merkmalen nach dem unabhängigen Verfahrensanspruch 1 und durch eine Vorrichtung mit den Merkmalen nach dem unabhängigen Vorrichtungsanspruch. Die jeweiligen Unteransprüche beziehen sich auf bevorzugte Ausführungsformen des erfindungsgemäßen Verfahrens bzw. der erfindungsgemäßen Vorrichtung.

Die Erfindung besteht insbesondere darin, daß die Sensorstrahlen von dem Abstandssensor mit einer Winkelverteilung ausgesendet werden, bei der die Zahl der Sensorstrahlen pro Winkeleinheit bezüglich der Hauptstrahlrichtung des Abstandssensors unterschiedlich ist. Die Winkelverteilung der Sensorstrahlen ist so ausgebildet, daß die Zahl der Sensorstrahlen pro Winkeleinheit von größeren zu kleineren Winkeln bezüglich der Hauptstrahlrichtung des Abstandssensors zunimmt, wobei die Hauptstrahlrichtung des Abstandsensors gleich der Fahrtrichtung des Fahrzeuges ist. Dies hat den Vorteil, daß auch kleinere Hindernisse schon in größerer Entfernung vom Abstandssensor erfaßt werden.

Zusätzlich zu den Sensorstrahlen, die im wesentlichen in Fahrtrichtung ausgesendet werden, wird bei einer besonderen Ausführungsform wenigstens ein Sensorstrahl im wesentlichen quer zur Fahrtrichtung verlaufend ausgesendet.

Eine andere Ausführungsform sieht vor, daß der Abstandssensor wenigstens zwei Sensorstrahlenbündel aussendet, die jeweils mehrere Sensorstrahlen in räumlich unterschiedliche Richtungen umfassen.

Nach einer vorteilhaften Ausbildung der Erfindung ist der Abstandssensor ein optischer Abstandssensor, vorzugsweise ein Lasersensor mit wenigstens fünf Sensorstrahlen.

Nachfolgend wird die Erfindung zum besseren Verständnis anhand eines Ausführungsbeispiels näher beschrieben. Die zugehörigen Zeichnungen zeigen:
- Fig. 1: eine Draufsicht einer Anordnung mit fünf Sensorstrahlen eines Abstandssensors nach dem Stand der Technik,
- Fig. 2: eine Draufsicht einer erfindungsgemäßen Anordnung von fünf Sensorstrahlen eines Abstandssensors und
- Fig. 3: eine Draufsicht einer erfindungsgemäßen Anordnung von sechs Sensorstrahlen eines Abstandssensors.

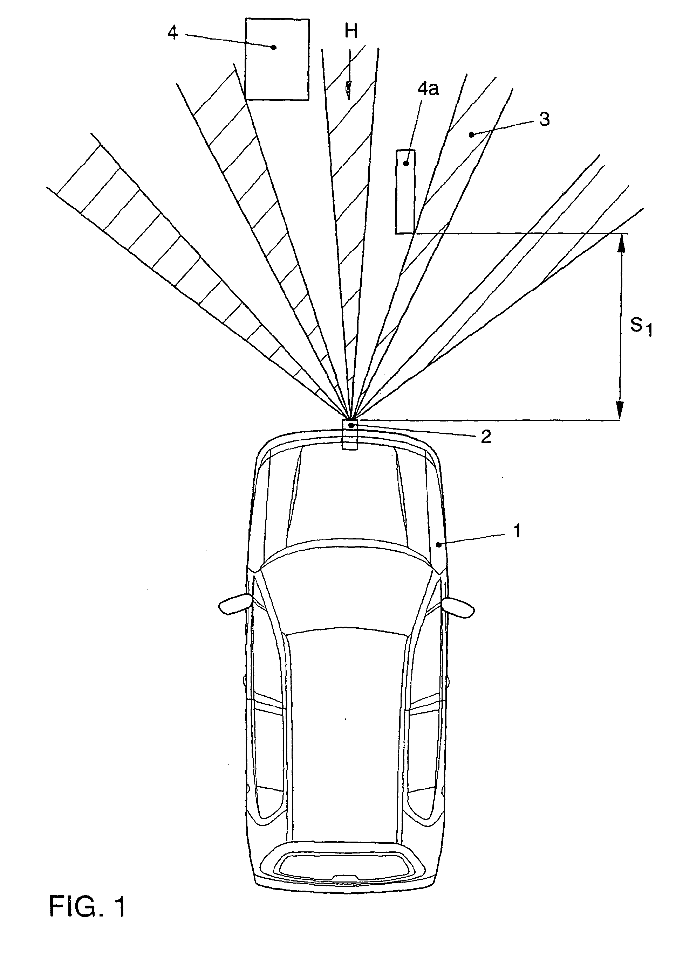

Es ist bekannt in Kraftfahrzeugen 1 optische Abstandssensoren 2, z. B. Lasersensoren einzusetzen (Fig. 1). Diese Abstandssensoren 2 senden in einem definierten Winkelbereich Sensorstrahlen 3, im Ausfüh-rungsbeispiel fünf Sensorstrahlen, symmetrisch im gleichen Winkel zueinander in Fahrtrichtung ab. Trifft einer oder mehrere Sensorstrahlen 3 auf ein Hindernis 4 werden diese vom Hindernis zurückreflektiert. Über die Laufzeit des gesendeten und danach zurückreflektierten Sensorsignals kann dann der Abstand des Hindernisses 4 zum Abstandssensor und damit zum Fahrzeug ermittelt werden.

Nachteilig ist jedoch, daß kleinere Hindernisse 4a, wie Motorräder in ungünstigen Fällen in den Lücken zwischen den Sensorstrahlen 3 hindurchrutschen können und erst in einer geringen Entfernung S₁ vom Abstandssensor 2 bemerkt werden.

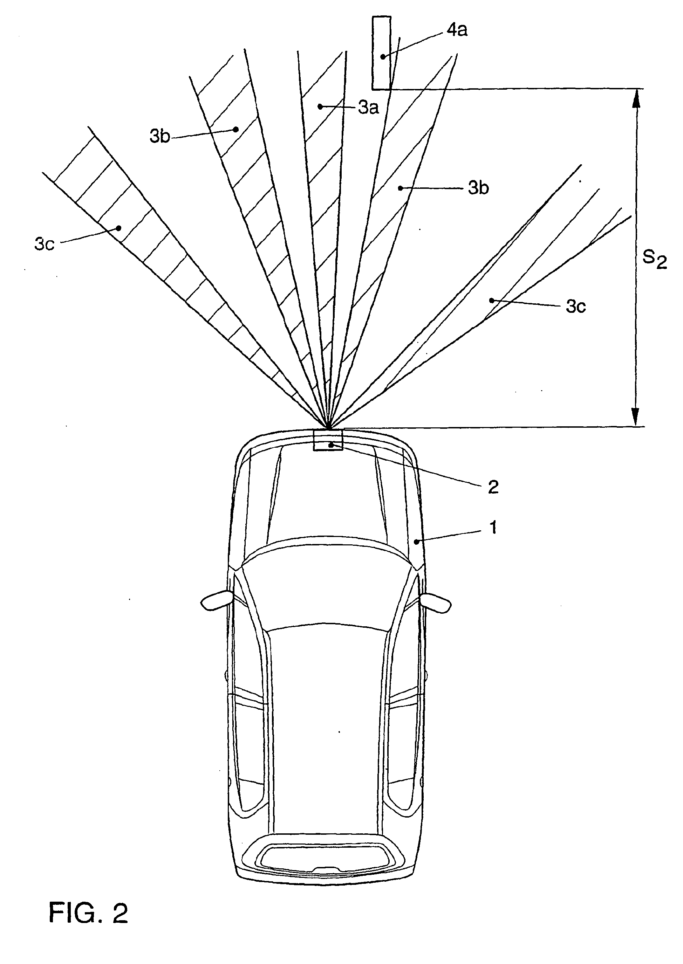

Um eine solche Gefahrensituation auszuschließen, ist in Fig. 2 vorgesehen, die Winkelverteilung der Sensorstrahlen 3 derart zu verändern, daß der Winkel zwischen den Strahlen 3a und 3b kleiner ist, als der Winkel zwischen den Strahlen 3b und 3c. Dabei ist der Winkel zwischen den Strahlen 3a und 3b so definiert, daß ein Hindernis auch im ungünstigsten Fall in einer festgelegten Entfernung S₂ erfaßt wird. Entsprechend ist der Winkel zwischen den Sensorstrahlen 3b und 3c bei Beibehaltung des Überdeckungsbereichs der Sensorstrahlen 3 größer.

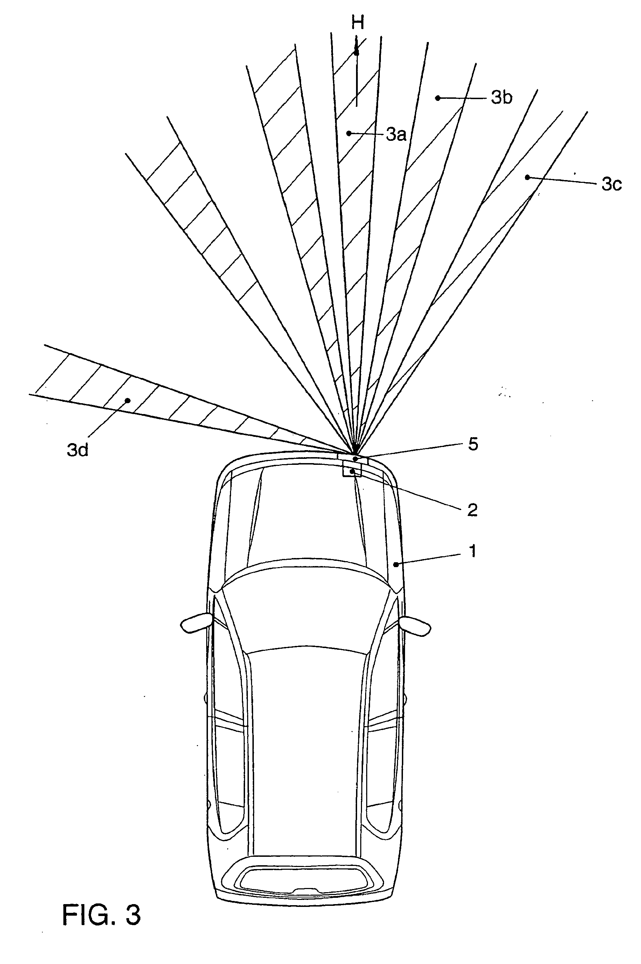

Bei dem in Fig. 3 dargestellten Ausführungsbeispiel sendet der im rechten Scheinwerfer 5 des Fahrzeuges 1 angeordnete Abstandssensor 2 sechs Sensorstrahlen 3 ab. Die Sensorstrahlen 3a bis 3c werden dabei, wie in Fig. 2, in einem Strahlenbündel in Fahrtrichtung des Fahrzeuges 1 ausgesendet. Den sechsten Strahl 3d dagegen sendet der Abstandssensor 2 im wesentlichen quer zur Fahrtrichtung aus. Damit wird erreicht, daß Einschervorgänge von anderen Fahrzeugen vor das hier betrachtete Fahrzeug 1 nach dem Überholen oder Ausschervorgängen des Fahrzeuges besser überwacht werden können.

### BEZUGSZEICHENLISTE

- 1: Fahrzeug
- 2: Abstandssensor
- 3: Sensorstrahlen
- 4: Hindernis
- 5: Scheinwerfer
- H: Hauptstrahlrichtung
- S₁: Entfernung
- S₂: Entfernung

## Patentansprüche

1. Verfahren zum Bestimmen eines Abstandes eines Hindernisses von einem Fahrzeug, das sich in einer Fahrtrichtung bewegen kann, mit mindestens einem in dem Fahrzeug eingebauten Abstandssensor, bei dem von dem Abstandssensor (2) Sensorstrahlen (3) in räumlich unterschiedlichen Richtungen ausgesendet werden und von dem Abstandssensor (2) wenigstens ein von dem Hindernis rückgesteuertes Sensorsignal (3) erfaßt wird,
**dadurch gekennzeichnet, daß** die Sensorstrahlen (3) von dem Abstandssensor (2) mit einer Winkelverteilung ausgesendet werden, bei der die Zahl der Sensorstrahlen (3) pro Winkeleinheit von größeren zu kleineren Winkeln bezüglich der Hauptstrahlrichtung (H) des Abstandssensors (2) zunimmt, wobei die Hauptstrahlrichtung (H) des Abstandssensors (2) gleich der Fahrtrichtung des Fahrzeuges ist und wobei benachbarte Sensorstrahlenbündel Lücken zwischeneinander aufweisen.

2. Verfahren nach Anspruch 1, **dadurch gekennzeichnet, daß** die Winkelverteilung der Sensorstrahlen (3) bezüglich der Hauptstrahlrichtung (H) des Abstandssensors (2) asymmetrisch ist.

3. Verfahren nach Anspruch 1 oder 2, **dadurch gekennzeichnet, daß** wenigstens ein Sensorstrahl (3d) im wesentlichen quer zur Fahrtrichtung des Fahrzeuges (1) verlaufend ausgesendet wird.

4. Verfahren nach einem der Ansprüche 1 bis 3, **dadurch gekennzeichnet, daß** der Abstandssensor (2) wenigstens zwei Sensorstrahlenbündel aussendet, die jeweils mehrere Sensorstrahlen (3) in räumlich unterschiedliche Richtungen umfassen.

5. Vorrichtung zum Bestimmen des Abstandes eines Hindernisses von einem Fahrzeug (1), das sich in einer Fahrtrichtung bewegen kann, mit mindestens einem in dem Fahrzeug eingebauten Abstandssensor (2) zum Aussenden von mehreren Sensorstrahlen (3) und zum Erfassen wenigstens eines von dem Hindernis (4) rückgestreuten Sensorsignals (3), **dadurch gekennzeichnet, daß** der Abstandssensor (2) derart ausgebildet ist, daß die Sensorstrahlen (3) mit einer Winkelverteilung ausgesendet werden, bei der die Zahl der Sensorstrahlen (3) pro Winkeleinheit von größeren zu kleineren Winkeln bezüglich der Hauptstrahlrichtung des Abstandssensors (1) zunimmt, wobei die Hauptstrahlrichtung (H) des Abstandssensors (2) gleich der Fahrtrichtung des Fahrzeuges ist und wobei benachbarte Sensorstrahlenbündel Lücken zwischeneinander aufweisen.

6. Vorrichtung nach Anspruch 5, **dadurch gekennzeichnet, daß** der Abstandssensor (2) derart ausgebildet ist, daß die Sensorstrahlen (3) mit einer bezüglich der Hauptstrahlrichtung des Abstandssensors (2) asymmetrischen Winkelverteilung aussendbar sind.

7. Vorrichtung nach Anspruch 5 oder 6, **dadurch gekennzeichnet, daß** der Abstandssensor (2) derart ausgebildet ist, daß wenigstens ein Sensorstrahl (3d) im wesentlichen quer zur Fahrtrichtung des Fahrzeuges (1) verlaufend aussendbar ist.

8. Vorrichtung nach einem der Ansprüche 5 bis 7, **dadurch gekennzeichnet, daß** der Abstandssensor (2) ein optischer Sensor ist.

9. Vorrichtung nach einem der Ansprüche 5 bis 8, **dadurch gekennzeichnet, daß** der Abstandssensor (2) eine erste Sendevorrichtung und eine zweite Sendevorrichtung umfaßt, wobei die erste Sendevorrichtung ein erstes Sensorstrahlbündel und die zweite Sensortrahlrichtung ein zweites Sensorstrahlbündel in jeweils räumlich unterschiedlichen Richtungen aussendet.

## Claims

1. Method for determining the distance between an obstacle and a vehicle which can move in a direction of travel, having at least one distance sensor which is installed in the vehicle and in which sensor beams (3) are emitted by the distance sensor (2) in spatially different directions, and at least one sensor signal (3) which is reflected back by the obstacle is sensed by the distance sensor (2), **characterized in that** the sensor beams (3) are emitted by the distance sensor (2) with an angular distribution in which the number of sensor beams (3) per angular unit increases from relatively large angles to relatively small angles with respect to the main beam direction (H) of the distance sensor (2), the main beam direction (H) of the distance sensor (2) being equal to the direction of travel of the vehicle and adjacent sensor beam bundles having gaps between one another.

2. Method according to Claim 1, **characterized in that** the angular distribution of the sensor beams (3) is asymmetrical with respect to the main beam direction (H) of the distance sensor (2).

3. Method according to Claim 1 or 2, **characterized in that** at least one sensor beam (3d) is emitted extending essentially transversely with respect to the direction of travel of the vehicle (1).

4. Method according to one of Claims 1 to 3, **characterized in that** the distance sensor (2) emits at least two sensor beam bundles which each comprise a plurality of sensor beams (3) in spatially different directions.

5. Device for determining the distance between an obstacle and a vehicle (1) which can move in a direction of travel, having at least one distance sensor (2), installed in the vehicle, for emitting a plurality of sensor beams (3) and for sensing at least one sensor signal (3) which is reflected back by the obstacle (4), **characterized in that** the distance sensor (2) is embodied in such a way that the sensor beams (3) are emitted with an angular distribution in which the number of sensor beams (3) per angular unit increases from relatively large to relatively small angles with respect to the main beam direction of the distance sensor (2), the main beam direction (H) of the distance sensor (2) being equal to the direction of travel of the vehicle and adjacent sensor beam bundles having gaps between one another.

6. Device according to Claim 5, **characterized in that** the distance sensor (2) is embodied in such a way that the sensor beams (3) can be emitted with an angular distribution which is asymmetrical with respect to the main beam direction of the distance sensor (2).

7. Device according to Claim 5 or 6, **characterized in that** the distance sensor (2) is embodied in such a way that at least one sensor beam (3d) can be emitted extending essentially transversely with respect to the direction of travel of the vehicle (1).

8. Device according to one of Claims 5 to 7, **characterized in that** the distance sensor (2) is an optical sensor.

9. Device according to one of Claims 5 to 8, **characterized in that** the distance sensor (2) comprises a first transmitter device and a second transmitter device, the first transmitter device emitting a first sensor focussed beam and the second transmitter device emitting a second sensor focussed beam in respectively spatially different directions.

## Revendications

1. Procédé de détection d'une distance d'un obstacle par rapport à un véhicule qui peut se déplacer dans un sens de déplacement comportant au moins un détecteur de distance (2) intégré dans le véhicule, avec lequel des rayons du détecteur (3) sont émis par le détecteur de distance (2) dans différentes directions dans l'espace et au moins un signal de détecteur (3) réfléchi par l'obstacle est capté par le détecteur de distance (2), **caractérisé en ce que** les rayons du détecteur (3) sont émis par le détecteur de distance (2) avec une répartition angulaire selon laquelle le nombre de rayons du détecteur (3) augmente par unité d'angle des angles les plus grands aux angles les plus petits par rapport au sens de rayonnement principal (H) du détecteur de distance (2), le sens de rayonnement principal (H) du détecteur de distance (2) étant identique au sens de déplacement du véhicule et les faisceaux de rayons de détecteur voisins présentant entre eux des vides.

2. Procédé selon la revendication 1, **caractérisé en ce que** la répartition angulaire des rayons du détecteur (3) est asymétrique par rapport au sens de rayonnement principal (H) du détecteur de distance (2).

3. Procédé selon la revendication 1 ou 2, **caractérisé en ce qu'**au moins un rayon du détecteur (3d) est émis selon un tracé pratiquement perpendiculaire au sens de déplacement du véhicule (1).

4. Procédé selon l'une des revendications 1 à 3, **caractérisé en ce que** le détecteur de distance (2) émet au moins deux faisceaux de rayons de détecteur qui comprennent chacun plusieurs rayons de détecteur (3) dans différentes directions dans l'espace.

5. Système de détection de la distance d'un obstacle par rapport à un véhicule (1) qui peut se déplacer dans un sens de déplacement comportant au moins un détecteur de distance (2) intégré dans le véhicule pour émettre plusieurs rayons de détecteur (3) et pour capter au moins un signal de détecteur (3) réfléchi par l'obstacle (4), **caractérisé en ce que** le détecteur de distance (2) est configuré de telle manière que les rayons du détecteur (3) sont émis avec une répartition angulaire selon laquelle le nombre de rayons du détecteur (3) augmente par unité d'angle des angles les plus grands aux angles les plus petits par rapport au sens de rayonnement principal du détecteur de distance (2), le sens de rayonnement principal (H) du détecteur de distance (2) étant identique au sens de déplacement du véhicule et les faisceaux de rayons de détecteur voisins présentant entre eux des vides.

6. Système selon la revendication 5, **caractérisé en ce que** le détecteur de distance (2) est configuré de telle manière que les rayons du détecteur (3) peuvent être émis avec une répartition angulaire asymétrique par rapport au sens de rayonnement principal (H) du détecteur de distance (2).

7. Système selon la revendication 5 ou 6, **caractérisé en ce** le détecteur de distance (2) est configuré de telle manière qu'au moins un rayon du détecteur (3d) est émis selon un tracé pratiquement perpendiculaire au sens de déplacement du véhicule (1).

8. Système selon l'une des revendications 5 à 7, **caractérisé en ce que** le détecteur de distance (2) est un détecteur optique.

9. Système selon l'une des revendications 5 à 8, **caractérisé en ce que** le détecteur de distance (2) comprend un premier dispositif d'émission et un deuxième dispositif d'émission, le premier dispositif d'émission émettant un premier faisceau de rayons et le deuxième dispositif d'émission émettant un deuxième faisceau de rayons, chacun dans différentes directions dans l'espace.
